# EUROPEAN PATENT SPECIFICATION

(11) **EP 2 559 338 B1**
(45) Date of publication and mention of the grant of the patent: **07.01.2015**
(21) Application number: 11724682.7
(22) Date of filing: 07.04.2011
(51) Int. Cl.: A01M 1/02, A01M 1/10

(54) **TRAPPING DEVICE FOR FRUIT-FEEDING INSECTS**
FALLE FÜR OBSTFLIEGEN
PIÈGE POUR INSECTES FRUGIVORES

(30) Priority: 12.04.2010 ES 201030327 U
(43) Date of publication of application: 20.02.2013
(73) Proprietor: Probodelt S.L., 43870 Amposta (ES)
(72) Inventor: RAMONEDA MOLINS, Joan Evangelista, E-08230 Matadepera (Barcelona) (ES); ROIG REVERTÉ, Jordi, E-43870 Amposta (Tarragona) (ES)
(74) Representative: Curell Suñol S.L.P.
(86) International application number: PCT/ES2011/070238
(87) International publication number: WO 2011/128479

(56) References cited:
- ES-U- 1 069 468
- ES-U- 1 071 189
- FR-A1- 2 903 461
- GB-A- 2 230 172
- US-A- 4 400 903
- US-A- 5 392 560
- US-A1- 2008 263 938

## Description

### Field of the Invention

The invention relates to a trapping device for frugivorous insects according to claim 1.

### State of the Art

The control and elimination of frugivorous insects such as *Ceratitis Capitata* and *Bactrocera oleae,* better known as fruit fly and olive fruit fly, respectively, by means of trapping devices such as that described above is known in agricultural fruit tree farms for fruits such as oranges, lemons, peaches, olives and others.

To fight the pests of insects of this type, mass trapping is prepared, consisting of distributing a plurality of trapping devices which contain an attractant therein and usually an insecticide. The attractant consists of a diffuser containing pheromones, or another type of attractant, which attracts the target insects into the chamber of the device. In addition, once inside the chamber, the insecticide suitably placed inside the device is responsible for killing the insect either by contact or by creating a toxic atmosphere. Trapping seasons normally last between 60 and 120 days. A reduction of the number of captures occurs due to the loss of effectiveness of the pheromone diffusers in the course of the days.

A known device marketed by the applicant himself, Probodelt, S.L., under the registered trademark Maxitrap®, normally used in the aforementioned mass trapping, consists of a cylindrical lower base and cover demarcating the insect confining chamber. The lower base has three transparent side ducts for accessing the chamber and an additional lower vertical duct in the base of the cylinder. The insects can enter through any of the four ducts. Even though this known device significantly improved the number of captures obtained with respect to the previously used devices, it is desirable to increase the number of insects entering the chamber, especially in the last days of a mass trapping season, therefore increasing the total captures.

Document ES 1069468 U discloses a trapping device for frugivorous insects comprising a chamber for confining insects and at least one side hole from which a side duct to said chamber starts, the side hole having an entrance mouth and an exit mouth. The chamber comprises one opaque first zone and a translucent upper second zone through which direct outside light can enter the chamber. Furthermore, the side duct is opaque and transverse with respect to the vertical direction, according to an angle between 0 and 20º with respect to the horizontal direction.

Document ES 1071189 U discloses a trapping device for frugivorous insects comprising a base, and a lid removably joined together to form an insect confinement chamber, and at least one insect entrance opening into said chamber. The walls delimiting said chamber have, at least partially, a coating of contact insecticide for killing the entering insects once they knock against the coating.

### Summary of the Invention

The purpose of the invention is to provide a trapping device for frugivorous insects of the type indicated above, which facilitates the entrance of the insects into the insect confining chamber in order to increase the number of captures.

This is achieved by means of a trapping device of the type indicated above, according to the characterizing portion of claim 1.

As will be seen below, it was found that despite eliminating one of the potential entrances of insects into the confinement chamber through the lower area of the device, with the opaque base being convex and closed, contrary to what could be expected, a surprising increase in the number of captures occurs.

The invention further includes a series of preferred features which are the object of the dependent claims and the usefulness of which will be highlighted below in the detailed description of an embodiment of the invention.

In an embodiment of the invention said side duct is opaque. This produces a certain semidarkness inside the duct which improves the entrance of insects into the chamber, because once inside the duct, the insects tend to enter following the light at the end of the duct.

Preferably said lower base is spherical. This reduces the space occupied by the trapping device with a convex base to a minimum, which simplifies the storage and transportation of the devices.

In the device used up till now, the side ducts are transverse to the vertical direction. The bases of the current device are manufactured by plastic injection molding, this forces the side ducts to be separated tubes which are assembled in situ in the device when preparing for the trapping season. In a mass trapping season, 30 to 45 trapping devices are arranged per hectare, implying that the operator must assemble a large amount of tubes, which are assembled by pressure, and therefore slowing down the trapping preparation. To that end, another object of the invention consists of providing a device such that it facilitates mass trapping preparation.

Thus, in one embodiment of the device, said side duct and said first area form a single piece.

A problem inherent to the side ducts and the first area forming a single piece consists of the difficulty in stacking the bases. This may not represent a problem for small farms and farms close to the facilities distributing such devices. However, when the farm is of considerable size or is very far away, the costs for transporting the device may skyrocket. Thus, in order to solve this problem, the side duct is preferably movable with respect to said first area, such that said side duct can adopt a first position, in which it is oriented in a demolding direction for demolding said first area and a second position, in which it is oriented in a direction transverse to the demolding direction.

Also in order to simplify the implementation of bases of this type, the device optionally comprises a joint provided between said duct and said first area.

In an especially preferred manner, joint consists of a weakening area between the duct and the first area, the weakening area being configured such that it allows the movement of said duct with respect to said first area between said first and said second positions. As a result, the manufacturing costs are drastically reduced because the mold for manufacturing the bases is extremely simple.

Finally, in an optional embodiment, the side duct is oriented oblique to the vertical direction according to an angle comprised in a range of 0 to 20º with respect to the horizontal direction, which facilitates the entrance of flying insects.

Likewise, the invention also includes other detail features illustrated in the detailed description of an embodiment of the invention and in the attached figures.

### Brief Description of the Drawings

Other advantages and features of the invention will be seen from the following description in which, referring to the attached drawings, preferred embodiments of the invention are described with a non-limiting character. The figures show:
Figure 1 is a partially sectioned view of a trapping device according to the state of the art.
Figure 2 is a partially sectioned view of a trapping device.
Figure 3 is a longitudinally sectioned view of another trapping device.
Figure 4A is a longitudinally sectioned view of a trapping device according to the invention.
Figure 4B is an enlarged view of the joint between the side duct and the first area.
Figures 5A, 5B are perspective views of a sequence of going from a demolding position of the base to a functional position of the base according to Figure 4.
Figure 6 is a longitudinally sectioned view of two stacked bases corresponding to the device of Figure 4.

### Detailed Description of Embodiments of the Invention

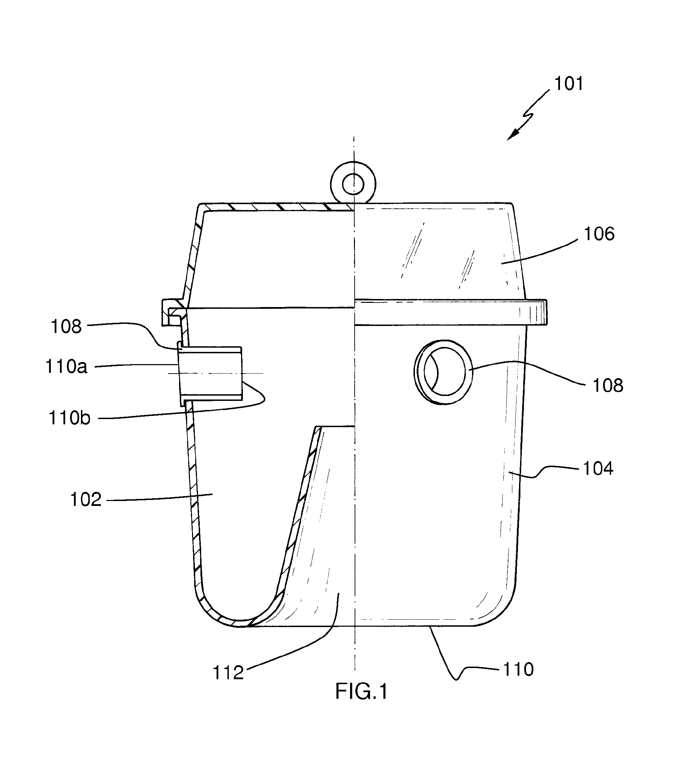

Figure 1 shows the Maxitrap® trapping device of the state of the art marketed by the applicant.

The device 101 is formed by an opaque, cylindrical orange vessel 104 and a transparent cylindrical cover 106 defining an insect confining chamber 102. The device 101 has three transverse side ducts 108 arranged at 120º on its side walls. These side ducts 108 define an inlet mouth 110a and an outlet mouth 110b. In addition, on the lower part, the vessel 104 has an additional lower vertical duct 112 in the base 110 of the cylinder which also allows accessing the chamber 102 through the lower part. Even though this device 101 functions well, there is a need to increase the number of captures obtained with respect to this known device and especially when the attractant diffusers lose their efficiency at the end of the trapping season.

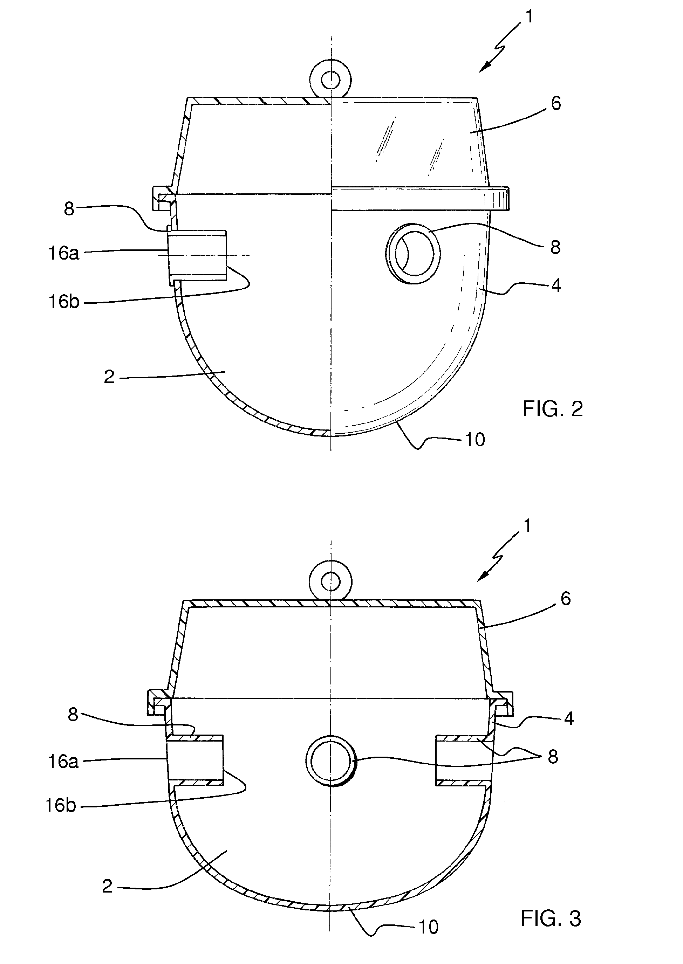

In the trapshown in Figure 2, it is observed that the device 1 has a lower opaque first area 4 formed by a vessel and an upper translucent second area 6 through which light from the outside can directly enter the chamber. Both areas 4, 6 define an insect confining chamber 2. As seen, the lower base 10 of the first area 4 is convex and is closed, i.e., it does not have any lower duct for accessing the inside of the chamber 2. In this case, the lower base 10 has a semi-spherical shape.

In this case, the first area 4 corresponds with the vessel of the device 1, whereas the second area 6 corresponds with the cover of the trapping device 1. However, this physical separation between opaque and translucent areas is not essential for the invention. For example, the vessel could be partially translucent in the upper area, or the cover could be partially opaque. In any case, the requirement that must be met is that at least an opaque first area 4 is a lower area and that the lower base 10 of this opaque first area 4 is convex and has no ducts entering the chamber 2, because based on accumulated experience, the flies apparently tend move closer to the device through the side part of the area 4.

The device 1 comprises three side ducts 8 also arranged at 120º with an inlet mouth 16a and an outlet mouth 16b, In this case, the side ducts 8 are transparent like in the state of the art and are in contrast with the opacity of the first area 4.

Figure 3 shows another trap in which the first area 4 is also convex and opaque, but has certain differences with respect to the previous case. The lower base 10 has a flatter convex shape of revolution whereas the cover corresponding to the second area 6 is similar to that of the state of the art. The invention does not rule out other convex surfaces such as a paraboloid of revolution or a semi-ellipsoid. Also unlike the previous case, the device 1 has four side ducts 8 arranged at 90º for increasing the side entrance points for the insects and they are opaque like the first area. A significant advantage of this embodiment consists of, unlike the state of the art, it not being necessary to assemble the ducts 8 for preparing mass trapping. The side ducts 8 and the first area 4 form a single piece which in this case forms the vessel itself. The vessel of the device 1 of this embodiment can be manufactured by stereolithography.

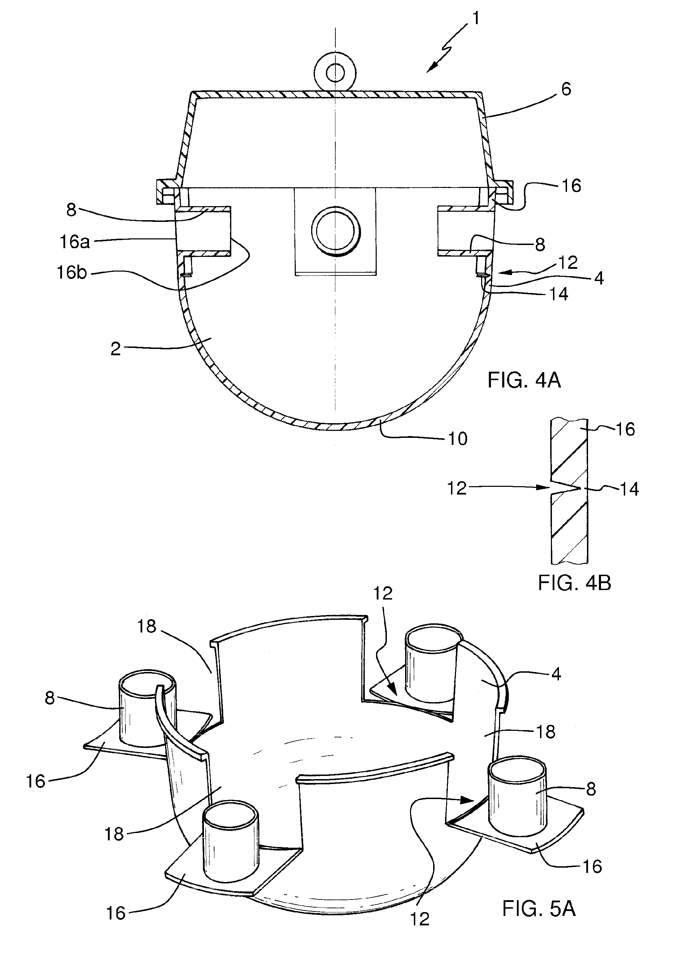

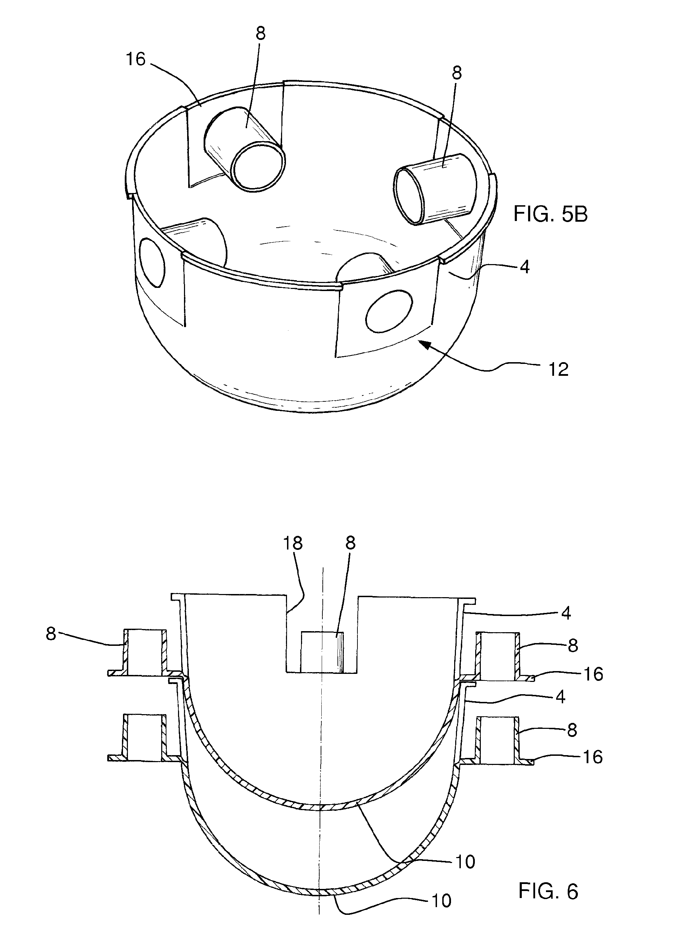

Finally, Figures 4A to 6 show an embodiment of the invention which in general terms is similar to that of the already discussed figures. However, this embodiment has a significant advantage. As seen in the figures, in this case the side ducts 8 are movable with respect to the vessel between a first position, in which the side ducts 8 are oriented in a demolding direction for demolding the vessel and a second position, in which they are oriented in a direction transverse to the demolding direction. Particularly, as seen in the figures, the device 1 comprises a lower joint 12 between each of the ducts 8 and the perimetric wall of the vessel. Thus, each tab 16 supporting its respective duct 8, when going from the demolding position to the use position, fits into the notch 18 which is formed in the wall of the vessel. In this particular and non-limiting case, the joint 12 consists of a weakening area 14 in the wall of the vessel which forming a film hinge. The hinge facilitates the movement of each of the ducts 8 with respect to the vessel for going from the demolding position shown in Figures 5A or 6, to the use position of the device shown in Figures 4A or 5B.

This embodiment has the advantage that the vessel manufacture is greatly simplified since the mold does not have to have sliders for forming the ducts 8. In addition, and unlike the embodiment of Figure 3, the vessels can be stacked reducing the storage space, which positively affects the transportation costs.

It is also worth commenting that this embodiment allows the ducts 8, in a use position, to have a certain inclination with respect to the vertical direction since the vessel can be demolded without problems. Thus, in an optional embodiment, the side duct 8 in a use position is oriented oblique to the vertical direction according to an angle comprised in a range of 0 to 20º with respect to the horizontal direction.

The comparative study to check the improvement in the number of captures of the device according to invention with respect to the known device of the state of the art is shown below.

Particularly, the objective of the test was to compare the total number of captures of the applicant's device marketed under the name Maxitrap® the features of which have been described in Figure 1, with the device having a convex and closed base.

An attractant diffuser which comprised ammonium acetate, trimethylamine and diaminoalkane was placed inside the chamber 2 of both devices. An example of diffusers of this type is FERAG CC D TM COMPACTO manufactured by the company Sociedad Española de Desarrollos Químicos S.L., as well as an insecticide diffuser which contained 2,2-dichlorovinyl dimethyl phosphate, commonly known as DDVP. An example of such diffuser is FERAG CC I TM, also marketed by the company Sociedad Española de Desarrollos Químicos, S.L.

Thus, the variables to be compared were the following:

| Variable | Trapping device | Ducts |
|---|---|---|
| C1 | Maxitrap® | 3 side ducts and 1 lower duct |
| C2 | Device having a convex and closed base | 4 side ducts |

### Testing conditions

Material: 4 clusters or repetitions were placed, with two devices 101 according to Figure 1 and two devices 1 of the type of Figure 3 in each cluster. The test lasted for 73 days.

Sample collection (examinations): the devices 1, 101 were examined twice a week, the frequency being increased depending on the pressure of the pest (number of captures). The number of captures of Ceratitis Capitata was counted in each examination.

Rotation of the devices: In order to avoid the possible influence of the location of the type of device on the number of captures, the devices of each cluster were rotated in each examination. The rotation leads to all the devices having passed through all the positions of the repetition to which they pertained for the same number of times at the end of the test. In this case, a complete rotation cycle of devices is closed every two examinations.

Finally, once all the captures were analyzed, the device of the state of the art obtained 43.3% of the captures compared to 56.7% obtained by the device according to invention with a probability of p=0.040 for the Student's T Test, showing that a device with an opaque, convex and closed base increases the number of insect captures in a statistically significant manner.

## Claims

1. A Trapping device for frugivorous insects comprising
[a] an insect confining chamber (2),
[b] said chamber (2) comprising at least a lower opaque first area (4) and an upper translucent second area (6) through which light from the outside can directly enter said chamber (2),
[c] at least one side duct (8) with an inlet mouth (16a) and an outlet mouth (16b) for accessing said chamber (2), said side duct (8) being arranged on said first area (4) to form a single piece, and
[d] the lower base (10) of said first area (4) having an outer convex shape and being closed,
**characterized in that**
[e] said confining chamber (2) is delimited by a vessel and a cover removably mounted on said vessel,
[f] said side duct (8) is movable with respect to said first area (4), such that said side duct (8) can adopt a first position, in which it is oriented in a demolding direction for demolding said first area (4) and a second position, in which it is oriented in a direction transverse to the demolding direction and **in that**
[g] said base (10) of said lower first area (4) is also opaque.

2. The device according to claim 1, **characterized in that** said side duct (8) is opaque.

3. The device according to claim 2, **characterized in that** said lower base (10) is spherical.

4. The device according to claim 1, **characterized in that** it comprises a joint (12) between said side duct (8) and said first area (4).

5. The device according to claim 4, **characterized in that** said joint (12) consists of a weakening area (14) between said side duct (8) and said first area (4), forming a film hinge which allows the movement of said side duct (8) with respect to said first area (4) between said first and second positions.

6. The device according to any of claims 1 to 5, **characterized in that** said side duct (8) is oriented oblique to the vertical direction according to an angle comprised in a range of 0 to 20º with respect to the horizontal direction.

## Patentansprüche

1. Falle für fruchtfressende Insekten, aufweisend:
(a) eine Insekten-Einschließkammer (2),
(b) wobei die Kammer (2) mindestens einen unteren, opaken, ersten Bereich (4) und einen oberen, lichtdurchlässigen, zweiten Bereich (6) aufweist, durch den Licht von außen direkt in die Kammer (2) eintreten kann,
(c) mindestens einen seitlichen Kanal (8) mit einer Einlassöffnung (16a) und einer Auslassöffnung (16b) zum Zugang zu der Kammer (2), wobei der seitliche Kanal (8) an dem ersten Bereich (4) derart angeordnet ist, dass ein integrales Stück gebildet ist, und
(d) wobei die untere Basis (10) des ersten Bereichs (4) eine konvexe äußere Formgebung aufweist und geschlossen ist,
**dadurch gekennzeichnet,**
(e) **dass** die Einschließkammer (2) durch ein Behältnis und eine an dem Behältnis lösbar angebrachte Abdeckung begrenzt ist,
(f) **dass** der seitliche Kanal (8) in Bezug auf den ersten Bereich (4) derart bewegbar ist, dass der seitliche Kanal (8) eine erste Position einnehmen kann, in der er in einer Formauflösungsrichtung zur Formauflösung des ersten Bereichs (4) orientiert ist, und eine zweite Position einnehmen kann, in der er in einer Richtung quer zu der Formauflösungsrichtung orientiert ist, und
(g) **dass** die Basis (10) des unteren ersten Bereichs (4) ebenfalls opak ist.

2. Vorrichtung nach Anspruch 1, **dadurch gekennzeichnet, dass** der seitliche Kanal (8) opak ist.

3. Vorrichtung nach Anspruch 2, **dadurch gekennzeichnet, dass** die untere Basis (10) kugelig ausgebildet ist.

4. Vorrichtung nach Anspruch 1, **dadurch gekennzeichnet, dass** sie ein Gelenk (12) zwischen dem seitlichen Kanal (8) und dem ersten Bereich (4) aufweist.

5. Vorrichtung nach Anspruch 4, **dadurch gekennzeichnet, dass** das Gelenk (12) aus einem Schwächungsbereich (14) zwischen dem seitlichen Kanal (8) und dem ersten Bereich (4) besteht, der ein Filmscharnier bildet, das eine Bewegung des seitlichen Kanals (8) in Bezug auf den ersten Bereich (4) zwischen der ersten und der zweiten Position zulässt.

6. Vorrichtung nach einem der Ansprüche 1 bis 5, **dadurch gekennzeichnet, dass** der seitliche Kanal (8) in einem Winkel, der in einem Bereich von 0 bis 20° in Bezug auf die horizo ntale Richtung liegt, schräg zu der vertikalen Richtung orientiert ist.

## Revendications

1. Dispositif de piégeage pour insectes frugivores, comprenant :
[a] une chambre de confinement d'insectes (2),
[b] ladite chambre (2) comprenant au moins une première zone opaque inférieure (4) et une deuxième zone translucide supérieure (6), à travers laquelle de la lumière venant de l'extérieur peut entrer directement dans ladite chambre (2),
[c] au moins un conduit latéral (8) avec une embouchure d'entrée (16a) et une embouchure de sortie (16b) pour accéder à ladite chambre (2), ledit conduit latéral (8) étant disposé sur ladite première zone (4) de façon à former une pièce unique, et
[d] la base inférieure (10) de ladite première zone (4) ayant une forme extérieure convexe et étant fermée,
**caractérisé en ce que :**
[e] ladite chambre de confinement (2) est délimitée par un récipient et un couvercle monté de façon amovible sur ledit récipient,
[f] ledit conduit latéral (8) est mobile par rapport à ladite première zone (4), de telle sorte que ledit conduit latéral (8) puisse adopter une première position, dans laquelle il est orienté dans une direction de démoulage pour le démoulage de ladite première zone (4), et une deuxième position, dans laquelle il est orienté dans une direction transversale à la direction de démoulage, et **en ce que** :
[g] ladite base (10) de ladite première zone inférieure (4) est également opaque.

2. Dispositif selon la revendication 1, **caractérisé en ce que** ledit conduit latéral (8) est opaque.

3. Dispositif selon la revendication 2, **caractérisé en ce que** ladite base inférieure (10) est sphérique.

4. Dispositif selon la revendication **1, caractérisé en ce qu'il** comprend un raccord (12) entre ledit conduit latéral (8) et ladite première zone (4).

5. Dispositif selon la revendication 4, **caractérisé en ce que** ledit raccord (12) est constitué par une zone d'affaiblissement (14) entre ledit conduit latéral (8) et ladite première zone (4), formant une charnière en film qui permet le mouvement dudit conduit latéral (8) par rapport à ladite première zone (4) entre lesdites première et deuxième positions.

6. Dispositif selon l'une quelconque des revendications 1 à 5, **caractérisé en ce que** ledit conduit latéral (8) est orienté en oblique par rapport à la direction verticale selon un angle situé dans une plage comprise entre 0 et 20°par rapport à la direction horizontale.
